Europäisches Patentamt

European Patent Office

Office européen des brevets

(11) Veröffentlichungsnummer : **0 160 016**
**B1**

(12) **EUROPÄISCHE PATENTSCHRIFT**

(45) Veröffentlichungstag der Patentschrift :
25.05.88

(21) Anmeldenummer : 84903629.8

(22) Anmeldetag : 19.09.84

(86) Internationale Anmeldenummer :
PCT/EP 84/00287

(87) Internationale Veröffentlichungsnummer :
WO/8501202 (28.03.85 Gazette 85/08)

(51) Int. Cl.⁴ : **A 47 J 41/00, A 47 G 23/04**

(54) ISOLIERKANNE MIT AUSLAUFTÜLLE.

(30) Priorität : 22.09.83 DE 8327217 U

(43) Veröffentlichungstag der Anmeldung :
06.11.85 Patentblatt 85/45

(45) Bekanntmachung des Hinweises ·auf die Patenterteilung : 25.05.88 Patentblatt 88/21

(84) Benannte Vertragsstaaten :
AT BE CH DE FR GB LI LU NL SE

(56) Entgegenhaltungen :
BE-A-  382 981
CH-A-  142 396
DE-C-  469 992
DE-U- 8 302 563
GB-A-  450 427
GB-A-  778 550
GB-A-  907 329
US-A- 3 037 652
US-A- 3 094 448

(73) Patentinhaber : EWG INTERNATIONAL LTD.
68 Johnston Road
Hong Kong (HK)

(72) Erfinder : WANDEL, Stephan, H., A.
Barlachweg 9
D-2800 Bremen 33 (DE)

(74) Vertreter : Zinngrebe, Horst, Dr.rer.nat. et al
Saalbaustrasse 11
D-6100 Darmstadt (DE)

## Beschreibung

Die Erfindung betrifft eine Isolierkanne mit einem ein Oberteil mit Henkel und ein Unterteil aufweisenden, oben offenen, bauchigen Behälter aus Kunststoff, in welchem ein oben offener, bauchiger Glaskolben zur thermisch isolierten Aufbewahrung von Flüssigkeiten gehalten ist, sowie mit einem Deckel für die obere Öffnung des Behälters.

Isolierkannen haben sich zur Aufbewahrung und zum Warmhalten heißer Flüssigkeiten wie Kaffee oder Tee im Haushalt bewährt. Dabei wird die Isolierkanne hauptsächlich als Vorratsbehälter benutzt. Bei der Verwendung einer Isolierkanne auf einer gedeckten Kaffeetafel erscheint sie dem Auge als Fremdkörper, weil ihre äußere Form dem jeweils benutzten Kaffeeservice nicht angepaßt ist.

Aus DE-U-8 302 563 ist eine Isolierkanne bekannt, deren Mantel bauchig gestaltet ist, und die eine zweiteilige Außenschale besitzt, wobei nach Lösen des einen Boden aufweisenden Teils der Außenschale ein Isoliereinsatz in das Innere der Außenschale einführbar und nach Wiederanbringen dieses Teils dort festlegbar ist.

Aus GB-A-450 427 ist ein aus Keramik oder Ton bestehender Teekanneneinsatz mit Auslaufstutzen bekannt, der zum Einsetzen von oben in den unteren Teil des Mantels möglichst kurz gehalten werden muß. Anschließend wird der obere Teil des Mantels mit dessen unterem Teil unlösbar verbunden.

Der Erfindung liegt die Aufgabe zugrunde, eine Isolierkanne der eingangs genannten Art zu schaffen, die sich in ihrer äußeren Formgebung möglichst weitgehend einer traditionellen Kaffeekannenform anpaßt.

Bei der eingangs genannten Isolierkanne gelingt die Lösung erfindungsgemäß dadurch, daß an die untere Hälfte des Behälters eine sich frei bis zur Höhe der oberen Öffnung erstreckende Auslauftülle angeformt ist, wobei der untere Abschnitt des Auslaufftüllen-Fußes Bestandteil des Unterteils ist, und daß an den bauchigen Abschnitt des Glaskolbens ein Stutzen angeschmolzen ist, der sich in die Auslauftülle bis kurz unterhalb ihres Schnabels erstreckt.

Zweckmäßig kann der Zwischenraum zwischen dem Glaskolben mit Stutzen und dem Behälter mit Auslauftülle mit einer Isolierschicht, beispielsweise Polyurethan-Schaum, ausgefüllt sein. Ferner kann an den Schnabel eine Verschlußklappe angelenkt sein.

Der Glaskolben kann in bevorzugter Ausgestaltung der Erfindung als doppelwandiger, evakuierter Isolierbehälter ausgestaltet sein. Alternativ kann der Glaskolben aus einem einwandigen, hitzefesten Glas bestehen.

Die Erfindng wird nachstehend anhand des in der beigefügten Zeichnung dargestellten Ausführungsbeispiels im einzelnen beschrieben. Es zeigen :

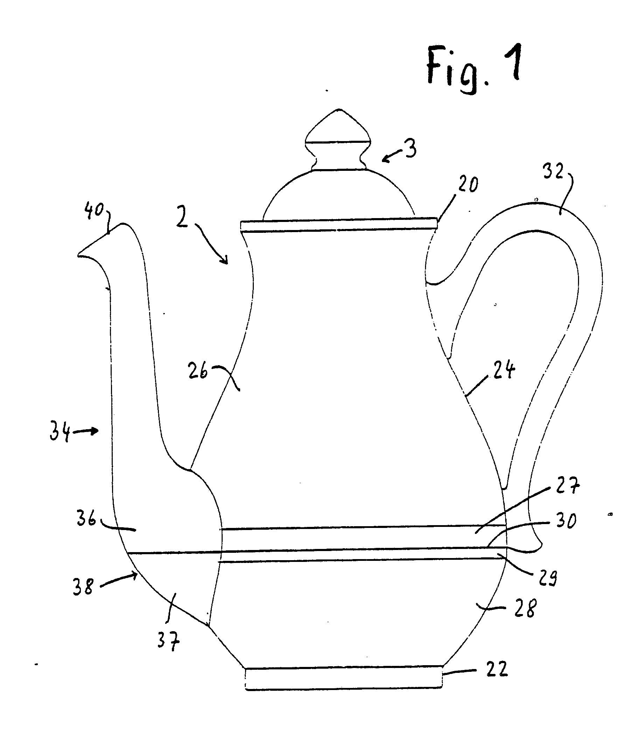

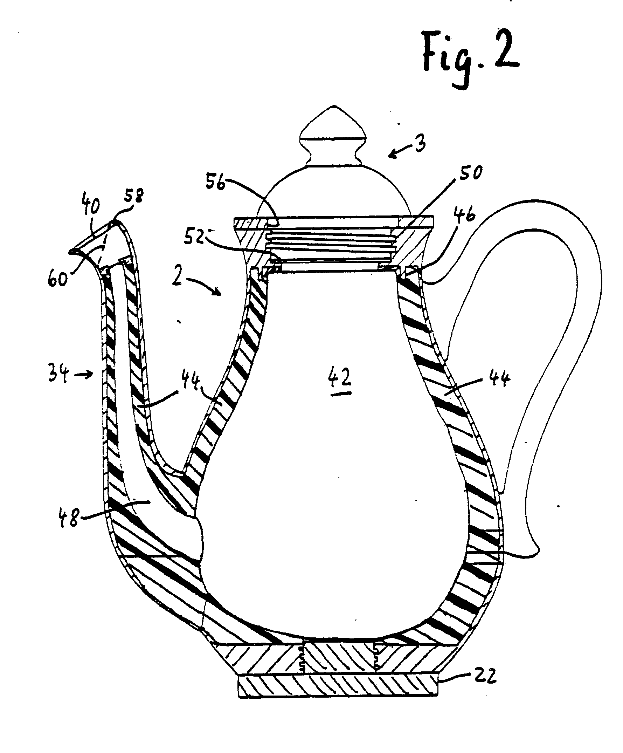

Fig. 1 die Ansicht einer Isolierkanne ; und Fig. 2 die Ansicht der Isolierkanne nach Fig. 1 mit weggeschnittener Gehäusehälfte.

Die Isolierkanne nach der Erfindung besteht aus einem im Ganzen mit 2 bezeichneten Behälter aus Kunststoff und einem Deckel 3 zum Verschließen der oberen Öffnung des Behälters 2. Der Behälter 2 besitzt einen oberen Kragen 20 und einen abgesetzten scheibenförmigen Fuß 22, der die Standfläche der Isolierkanne bildet. Die Mantellinie 24 verläuft im Bogen vom Kragen 20 zum Fuß 22, und zwar von oben nach unten zunächst leicht konkav, um anschließend in einer stark hervortretenden konvexen Linienführung eine bauchige Gesamtform des Behälters 2 zu erzeugen.

Der Behälter 2 besteht aus einem Oberteil 26 und einem Unterteil 28, die an der Trennlinie 30, die an der dicksten Stelle des Kannenbauches liegt, dauerhaft miteinander verbunden sind. Das Oberteil 26 schließt zur Trennlinie 30 mit einem Absatz 27 ab und das Unterteil 28 besitzt an der Trennlinie 30 einen Rand 29, dessen Außenfläche glatt an die Außenfläche des Absatzes 27 anschließt.

An das Oberteil 26 ist ein geschwungener Henkel 32 angeformt. An dem unteren Ende des Oberteils 26 ist gegenüber dem Henkel 32 der obere Abschnitt 36 des Fußes 38 einer Auslauftülle 34 angeformt, die sich mit leicht geschwungener Kontur etwa parallel zur Kannenmittellinie bis in die Höhe des Kragens 20 frei erhebt und in einem Schnabel 40 endet. Der untere Abschnitt 37 des Fußes 38 ist am oberen Rand des Unterteils 28 so angeformt, daß bei zusammengesetzter Isolierkanne der untere Abschnitt 37 glatt an die Außenfläche des oberen Abschnitts 36 anschließt.

Wie aus Fig. 2 zu erkennen ist, ist im Inneren des Behälters 2 ein oben Glaskolben 42 gehalten, dessen äußere, tropfenförmige Kontur der Kontur des Behälters 2 folgt. Zwischen dem Glaskolben 42 und dem Behälter 2 ist ein Zwischenraum gelassen, der mit Isoliermasse etwa in Form von Polyurethanschaum 44 ausgefüllt ist. Der Glaskolben 42 kann aus einem zweischaligen, dünnwandigen und evakuierten Glasgefäß bestehen oder, wie dargestellt, aus einem einwandigen, hitzefesten Glas gefertigt sein. Der Glaskolben 42 wird am oberen Ende von einem im Inneren des Kragens 20 ausgebildeten Ring 46 sowie ggfs. durch weitere, nicht dargestellte, im Inneren des Unterteils 28 ausgebildete Stützen seitlich gehalten. An dem dicksten Abschnitt des Glaskolbens 42 ist ein Stutzen 48 angeschmolzen, der sich in das Innere der Auslauftülle 34 bis kurz unterhalb des Schnabels 40 erstreckt und durch mehrere am Inneren der Auslauftülle 34 vorgesehene, im einzelnen nicht dargestellte Nasen seitlich gehalten ist. Das Innere des rohrförmigen, gebogenen Stutzens 48 steht mit dem Inneren des Glaskolbens 42 in Verbindung, so daß im Glaskolben 42 bevorratete Flüssigkeit, wie etwa Kaffee, durch den Stutzen 48 ausgegossen werden kann.

Der Fuß 22 des Behälters 2 ist in eine mit Innengewinde versehene, mittige Öffnung des Unterteils 28 so eingeschraubt, daß er als Spannschraube für den Glaskolben 42 wirkt und den Glaskolben 42 gegen die Dichtung am Ring 46 des Kragens 20 drückt. Der Stutzen 48 läßt zur Innenfläche der Auslauftülle 34 hinreichend Abstand, so daß der dadurch gebildete Zwischenraum mit Isolierstoff in Form von Polyurethanschaum ausgefüllt werden kann und die im Stutzen 48 stehende Flüssigkeitssäule thermisch isoliert.

Der Kragen 20, der sich über die obere Öffnung des Glaskolbens 42 und den Ring 46 erhebt, besitzt eine mittlere Öffnung, deren Innenfläche mit Innengewinde 50 versehen ist. In das Innengewinde 50 kann der haubenförmige Deckel 3 mit seiner balligen, mit einer Dichtung 52 versehenen Unterseite 54 eingeschraubt werden, so daß dann beim Ausgießen von Kaffee aus der Isolierkanne keine Flüssigkeit aus der oberen Öffnung 56 des Behälters 2 austreten kann.

Nicht dargestellt ist eine weitere Ausführungsform der erfindungsgemäßen Isolierkanne, bei der ergänzend am freien Ende 58 des Schnabels 40 an der zum Kragen 20 weisenden Seite eine Klappe angelenkt ist, die die Auslauftülle 34 bei stehender Isolierkanne verschließt, jedoch bei zum Ausgießen geneigter Isolierkanne die Öffnung der Auslauftülle 34 freigibt. Der Schnabel 40 wird dazu zweckmäßig, wie bei 60 angedeutet, steiler geschnitten.

Die Außenfläche des Oberteils 26 und des Unterteils 28 kann mit ansprechenden Dekoren versehen sein, so daß die erfindungsgemäße Isolierkanne sich formlich und in ihrer dekormäßigen Ausgestaltung einem traditionellen Kaffeeservice anpassen läßt.

## Patentansprüche

1. Isolierkanne mit einem ein Oberteil (26) mit Henkel (32) und ein Unterteil (28) aufweisenden, oben offenen, bauchigen Behälter (2) aus Kunststoff, in welchem ein oben offener, bauchiger Glaskolben (42) zur thermisch isolierten Aufbewahrung von Flüssigkeiten gehalten ist, sowie mit einem Deckel (3) für die obere Öffnung des Behälters (2), dadurch gekennzeichnet, daß an die untere Hälfte des Behälters (2) eine sich frei bis zur Höhe der oberen Öffnung (56) erstreckende Auslauftülle (34) angeformt ist, wobei der untere Abschnitt (37) des Auslauftüllen-Fußes (38) Bestandteil des Unterteils (28) ist, und daß an den bauchigen Abschnitt des Glaskolbens (42) ein Stutzen (48) angeschmolzen ist, der sich in die Auslauftülle (34) bis kurz unterhalb ihres Schnabels (40) erstreckt.

2. Isolierkanne nach Anspruch 1, dadurch gekennzeichnet, daß der Zwischenraum zwischen dem Glaskolben (42) mit Stutzen (48) und dem Behälter (2) mit Auslauftülle (34) mit einer Isolierschicht, beispielsweise Polyurethan-Schaum (44), ausgefüllt ist.

3. Isolierkanne nach Anspruch 1 oder 2, dadurch gekennzeichnet, daß an den Schnabel (40) eine Verschlußklappe angelenkt ist.

4. Isolierkanne nach einem der vorstehenden Ansprüche, dadurch gekennzeichnet, daß der Glaskolben (42) ein doppelwandiger, evakuierter Isolierbehälter ist.

5. Isolierkanne nach einem der Ansprüche 1 bis 3, dadurch gekennzeichnet, daß der Glaskolben aus einem einwandigen, hitzefesten Glas besteht.

## Claims

1. An insulated pot comprising an open-top bulbous plastic container (2) composed of an upper part (26) with a handle (32) and a lower part (28), in which container there is held captive an open-top bulbous glass balloon (42) for the thermally insulated storage of liquids, also comprising a lid (3) for the top opening of the container (2), characterised in that the lower half of the container (2) is so shaped as to include a pouring spout (34) which rises freely up to the level of the open top (56) and wherein the lower portion (37) of the pouring spout base (38) forms part of the lower part (28) and in that the bulbous section of the glass balloon (42) has an elbow (48), cast in place, which extends in the pouring spout (34) to within a short distance from the outlet (40).

2. The insulated pot according to claim 1, characterised in that the cavity between the glass balloon (42) including the elbow (48) and the container (2) including the pouring spout (34) is filled with an insulating layer, e.g. polyurethane (44).

3. The insulated pot according to claim 1 or 2, characterised in that a hinged sealing flap is arranged at the outlet (40).

4. The insulated pot according to any one of the preceding claims, characterised in that the glass balloon (42) is a double-wall, evacuated, insulating vessel.

5. The insulated pot according to any one of claims 1 to 3, characterised in that the glass balloon consists of single-wall heat-resistant glass.

## Revendications

1. Pot isolant comprenant un récipient renflé en matière plastique (2) qui est ouvert en haut, qui comprend une partie supérieure (26) avec une anse (32) et une partie inférieure (28), et dans lequel est maintenu un flacon en verre renflé et ouvert en haut (42) pour conserver des liquides de façon thermiquement isolée, et comprenant un couvercle (3) pour l'ouverture supérieure du récipient (2), caractérisé en ce que, sur la moitié inférieure du récipient (2), est moulé un bec verseur (34) s'étendant librement jusqu'à la hauteur de l'ouverture supérieure (56), la portion inférieure (37) du pied de bec verseur (38) faisant partie de la partie inférieure (28), et en ce que, sur la portion renflée du flacon en verre (42), est soudé un manchon (48) qui s'étend dans le bec verseur (34) jusqu'en dessous de son extrémité (40).

2. Pot isolant conforme à la revendication 1, caractérisé en ce que l'espace entre le flacon en verre (42) muni du manchon (48) et le récipient (2) muni du bec verseur (34) est rempli avec une couche isolante, par exemple avec de la mousse de polyuréthane (44).

3. Pot isolant conforme à la revendication 1 ou 2, caractérisé en ce qu'un clapet de fermeture est articulé sur l'extrémité (40).

4. Pot isolant conforme à l'une des revendications précédentes, caractérisé en ce que le flacon en verre (42) est un récipient isolant vide d'air à double paroi.

5. Pot isolant conforme à l'une des revendications 1 à 3, caractérisé en ce que le flacon en verre est constitué d'un verre réfractaire à simple paroi.

# Fig. 1

Fig. 2